# EUROPEAN PATENT APPLICATION

(11) **EP 1 462 707 A2**
(43) Date of publication of application: **29.09.2004**
(21) Application number: 04004200.4
(22) Date of filing: 25.02.2004
(51) Int. Cl.: F16L 55/165

(54) **Method, equipment and devices for the relining of conduits through the introduction of plastic tubes**

(30) Priority: 26.02.2003 IT MI20030339
(71) Applicant: Pranha 50 LTDA, 20020-100 Rio de Janeiro (BR)
(72) Inventor: Chizzoli, Edgardo, 20142 Milano (IT)
(74) Representative: Minoja, Fabrizio, Dr.

(57) **Abstract**

A method for placing a tube (11) made of plastic material within a conduit (12) in operation, comprising the stages of inundating the conduit with a liquid, then insert the tube with its initial end placed in the inundated portion, so that it slides along the conduit, while the hydrostatic impulse reduces the sliding effort.

Equipment for placement of a tube (11) made of plastic material within a conduit (12) in operation, comprising a pair of collectors (15, 115), each one counting on a connection (16, 116) for the fixation of sealing to a respective end of a portion of conduit (12). Each collector comprises a fragment of tube of entry/exit (17, 117) disposed inclined with an obtuse angle in relation to the axle of the respective end of the conduit, in order to stimulate and allow the passage of the tube in the conduit, and the nozzle (18, 118) of the fragment of the tube being at high above the conduit. The equipment further comprises means (19) to inundate with a liquid the portion of the conduit closed by two collectors, in order to allow the sliding of the tube along the conduit, while the hydrostatic impulse of the liquid reduces the sliding effort in the tube.

## Description

This invention refers to the insertion of a tube made of plastic material within a conduit already in operation.

There are system available, the so-called relining systems, for the recovery of conduits through the introduction of new tubes made of plastic material (for instance: polyethylene).

These systems are limited in their operation due to the maximum length of the tube to be introduced, eventual curves, due to the weight of the tube, etc. In general, the sections of the conduit shall be short (a few hundreds of meters at the most), in order to be able to pull the tube along the conduit. Furthermore, the attrition of sliding of the tube in the conduit not only obstructs the introduction, but also produces undesired abrasion of the lower end of the tube, said abrasion occurring proportionally to the length of the section in which it passes.

The significant limitation in the maximum sections exploitable is supportable in the case of relining of tubes in urban areas, where the structure of the network is divided into sections with limited length. On the other hand, the relining technique is not applicable to long conduits, such as pipelines with various hundreds of kilometers, where it would be unreasonable to think in covering the entire length of sections in a few dozens or at the most hundreds of meters at once.

The general objective of this invention is to resolve the problems aforementioned with a method, equipment, and devices that allow the relining in sections with long length.

Based on said objective, the invention proposes a method for the insertion of a tube made of plastic material inside a conduit already in operation, comprising the stages of inundation of the section of the conduit with a liquid, insertion of the tube with its initial end in the section inundated so that it may slide along the conduit, while the hydrostatic impulse reduces the sliding effort.

The invention herein further proposes an equipment for the insertion of a tube made of plastic material inside a conduit already in operation, comprising a pair of collectors, each one counting on a connection for the fixation of sealing to a respective end of a section of the conduit, and each collector further comprising a fragment of entry/exit tube that is disposed inclined with an obtuse angle in relation to the axle of the respective end of the conduit, in order to stimulate and allow the passage of the tube in the conduit, with the nozzle of the fragment of tube above the conduit, and the equipment will further comprise means to inundate the section of conduit closed by two collectors with a specific liquid to allow the sliding of the tube along the conduit, while the hydrostatic impulse reduces the sliding effort.

This invention further proposes a device for the insertion of a tube made of plastic material inside a conduit already in operation, comprising a collector counting on a connection for the fixation of sealing to a respective end of a section of conduit, said collector comprising an entry/exit connection of liquid of inundation of conduit and a fragment of entry/exit tube disposed inclined with obtuse angle in relation to the axle of the respective end of the conduit, in order to stimulate and allow the passage of the tube in the conduit.

In order to clarify the explanation of the innovating principles of this invention and its benefits in comparison to the technique already known, a possible exemplificative execution with the application of said principles is described below, supported by the drawings attached hereto.

### Concerning the drawings:

- figure 1 represents a schematic view in lateral elevation partially sectioned of a local of entry of initial of the relining equipment according to this invention;
- figure 2 represent a view, similar to figure 1, of the local of exit or terminal of the equipment according to the invention;
- figure 3 represents a schematic view of the two locations of the equipment during a second stage of work.

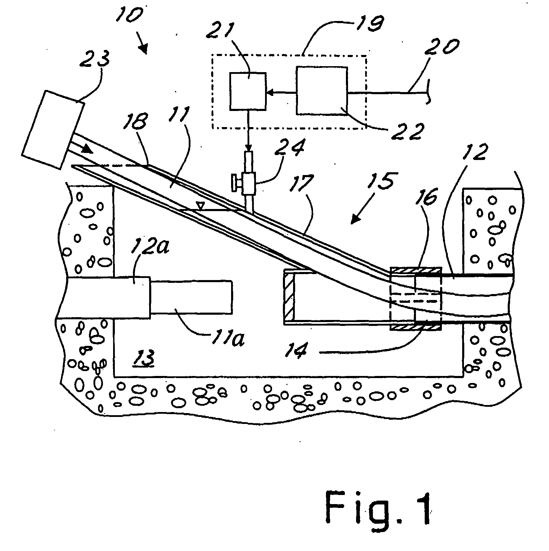

Concerning the figures, figure 1 represents the schematic view of a location of entry or initial, generally indicated with a 10, of a relining equipment according to the invention, for the insertion of a tube 11 made of plastic material inside a conduit 12 already in operation.

The location may be in fact initial, which means to say the beginning of the first section of the conduit that will be submitted to relining, or an intermediate location between the two sections. In the second case, the end of the precedent section 12a of conduct reaches the location, already with the internal tube 11 a that shall be connected to the tube 11 of the successive section through techniques already known (for instance: welding of initial part with initial part or with thermo-found joint).

As verified in the schematic view of the figure, the conduit 12 is buried and the location comprises an excavation in order to obtain a small well of work 13 where a section of the appropriate conduit will be exposed. The section not buried is sectioned in order to divide the successive section from the precedent section, then obtaining a point end or initial 14 of the section of conduit.

An appropriate collector 15 is assembled to the initial end 14 of the section of conduit. The collector 15 is provided with a connection 16 for its fixation of sealing to the end 14 of the conduit in order to close it. For instance, the connection 16 may be of the lock-type.

The collector further comprises a fragment of entry/exit tube 17 that points out from the body of the collector, and is inclined with an obtuse angle in relation to the axle of the respective end of the conduit. The nozzle 18 of the fragment of the tube is open to the exterior in order to allow the entry of tube 11 and to direct it along the conduit.

The is advantageously supplied by an optional hydraulic press, generally indicated with a 23. This device will not be described or demonstrated herein, since it is easily imaginable by the technician in charge.

The collector is advantageously provided with a entry/exit connection 24 for a liquid that will be inserted by the means 19 that exhaust the liquid from a source 20. The insertion of the liquid is made in order to inundate, at least partially, the conduit.

The nozzle 18 of the tube of entry is advantageously disposed above the conduit 12 in order to avoid the liquid from leaking through the tube of entry.

For the purposes to be clarified below, the means 19 of insertion of the liquid comprise means of circulation to the pump 21 and means 22 for heating the liquid.

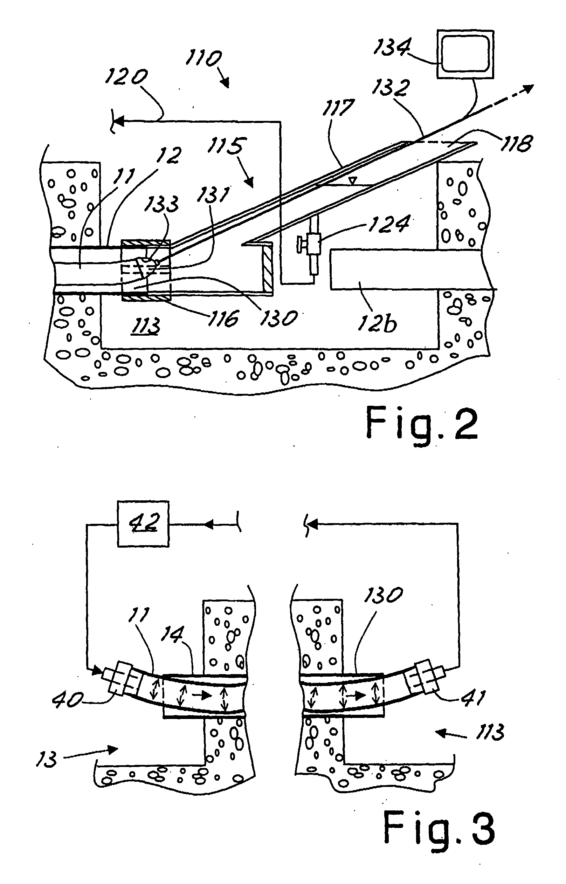

Figure 2 demonstrates the location, generally indicated with a 110, of arrival of the section of the conduit 12. This location may be also intermediate, with a successive section of conduit 12b starting in it.

Due to commodity purposes, elements similar to those of figure 1 will be indicated in figure 2 with the same numbering, increased in 100.

Location 110 comprises an excavation that forms a small well of work 113, where the section of the conduit sectioned is exposed, in order to divide the successive section from the precedent section. The terminal end 130 of the conduit 12 of figure 1 is assembled with sealing of an appropriate collector of exit 115, provided with a fixation connection 116 of the lock-type, for instance.

The collector is provided with a fragment of entry/exit tube 117 that points out from the body of the collector, inclined with an obtuse angle in relation to the axle of the end of the conduit, ending with an opening 118. The opening 118 is advantageously disposed above the conduit 12 in order to avoid the liquid from leaking through the opening 118.

The collector is advantageously provided with an entry/exit connection 124 for the liquid to be inserted in the conduit with the means 19. Concerning the objectives to be explained below, the connection 124 may be connected to a discharge tube 120 that may be submitted to the entry of the means 19 in order to re-circulate the liquid in the conduit.

Each collector 15, 115 is provided with a device for the insertion of the tube made of plastic material inside the conduit.

As verified in figure 2, the beginning of tube 11 is connected to a driving cable 132 through an appropriate fixation ogive 131. The cable 132 is stretched along the conduit through the traction means known (not demonstrated) disposed in the location of exit of the tube of the conduit.

The ogive may advantageously comprise a tele-camera 133 that allows the operator to observe, through a monitor 134, the itinerary of the tube 11 along the conduit.

The insertion of the driving cable may be carried out through any of the techniques known. For instance, an initial thin maneuvering rope introduced along the conduit with a pneumatic system using sphere made of plastic material filling the entire section of the conduit, and propelled by compressed air inserted from an end of the conduit. The sphere pulls the thin maneuvering rope to the other end of the conduit. The driving cable stretched along the conduit through the thin rope is then connected in series to the thin rope.

After the insertion of the driving cable, the conduit is inundated with the liquid and may initiate the stage of introduction of the relining tube. The inundation, that may be total or partial pursuant to the needs, may be sufficient to supply an adequate hydrostatic impulse to the tube 12, in order to reduce the sliding effort. The inundation liquid consists in water, and it may be added with the appropriate additives, if necessary, in order to reduce the attrition of the sliding of the tube in the conduit.

The optimized level of the liquid in the conduit is that to which the tube floats in intermediate position in the conduit, without touching the bottom, nor the walls, of the conduit. The initial end of the tube may be closed with sealing in order to use the air inside the tube to provide more fluctuation capacity to the tube. If the tube is made of material with specific weight below the specific weight of the liquid of inundation, the hydrostatic impulse may be also sufficient in case of inundation inside the tube.

The means of inundation 19 comprise means of circulation and of heating f the liquid in the conduit, so that the tube 12 is heated by the liquid in order to increase its flexibility during the sliding in the conduit. This allows a more rapid passage of the tube in the curved sections of the conduit, further reducing the effort of insertion. The temperature shall allow more flexibility to the tube, however the tube shall not loss the mechanical characteristics of resistance necessary for the insertion in the conduit. The optimized temperature will depend on the material of the tube. For instance, in case of tubes made of plastic material such as polyethylene, the ideal temperature of the liquid was verified at approximately 40-45°C.

Pursuant to the needs and preferences of the specific case, the means of circulation of the liquid may work in open cycle (to wit, with the liquid lost in the exit of the conduit) or in closed cycle (to wit, removing the liquid from the conduit through the entry/exit connection of one of the two collectors, reinserting it in the conduit through the entry/exit connection of the other collector).

Due to the hydrostatic impulse, it was possible to verify that the action of introduction of the tube is facilitated in a great deal, allowing the passage through long sections (at the order of kilometer(s)), maintaining the effort of introduction relatively low (and, anyhow, under the action of maximum forces possible to the material of the tube. The abrasions of the tube are also reduced to acceptable levels.

With the combination of impulse provided by the device 23 and the traction occurred through the driving cable 132, the insertion of the floating tube was considered as particularly rapid.

With the tele-camera, the operator of the traction crane is able to easily regulate the tension of the cable to maintain the initial end of the tube relatively centered with the conduit, and the tube relatively to the axle of the conduit. Thus, it is possible to avoid stranding and to reduce the abrasion in the tube. The abrasions are only casual and controllable, increasing or reducing the tension in the cable.

When the curves of the conduit are reached, an increase of tension in the driving cable obliges the initial end of the tube to bend along the curve, facilitated by the heating of the inundation liquid.

As verified in the schematic views of the figures and as a clear result of the description, the tube introduced shall have a reduced diameter in relation to the internal diameter of the conduit, in order to adequately use the hydrostatic impulse and to have an easy passage in the eventual curves of the conduit.

The possibility of expansion of the tube after the insertion of in the conduit was considered as advantageous, in order to occupy the entire section available. This can be done, for instance, by using a tube bended in its section, and circularly inflated after the introduction.

In case of tube made of thermo-plastic material, an expansion carried out by heat was considered as more suitable.

With this purpose, as verified in the schematic view of figure 3, after the full introduction of the tube along the section of the conduit, the collectors are disassembled and the ends of the tube are closed with covers 40, 41 provided with connections for the activation of means 42 of circulation of hot fluid under pressure. The means 42 may also be the means 19 of circulation of the inundation liquid.

The means 42 heat the circulating fluid (mainly water) at a temperature sufficient to reach the elastic temperature of the material of the tube, so that the tube in the conduit is softened and its radial expansion becomes stable. The exact temperature will depend on the material. A temperature deemed ideal to the polyethylene is of approximately 90°. The useful pressure is of approximately 3 atm differentially to the loss of charge.

Another fact discovered is that the diameter of the tube is of approximately 10% the internal diameter of the conduit before the expansion. The tube can be dilated to adhere the internal wall of the conduit.

When the tube has reached its maximum expansion, the heat exchanger of the means 42 is deactivated and the pump will throw cold water until the full cooling of the tube, in order to stabilize the new dimensions reached.

At this point it becomes clear that the objectives previously determined were reached. With the method and equipment according to the invention, the sections between the location of entry and the location of exit may be longer than those permitted by the technique known, and become sufficiently long to allow, in economic terms, the relining of long conduits. Furthermore, the speed of introduction of the tube may be relatively high, at the order of approximately 1 m. per minute or more, allowing sufficiently reduced time of work.

Naturally, the description above concerning the execution applying the innovative principles of this invention is presented as an example of said innovative principles, and it shall not be taken into limitation to the private nature claimed herein.

For instance, if necessary, the cable (adequately dimensioned) may be also used to apply the sliding effort of the tube as a whole or in part, even though if the introduction of the tube through impulse from the location of entry and use of the cable of initial end with driving functions of the tube along the channel is deemed particularly suitable (allowing an additionally accessory traction).

Furthermore, in the case of circulation of the heating fluids in enclosed circuits, the flux may be periodically inverted to regulate the temperatures along the tube.

## Claims

1. Method for the insertion of a tube made of plastic material inside a conduit already in operation, comprising the stages of inundation of a section of the conduit with a liquid, insertion of the tube with its initial end in the section inundated so that it may slide along the conduit, while the hydrostatic impulse reduces the sliding effort.

2. Method according to claim 1, **characterized by** the fact that before the insertion in the conduit, the initial end of the tube is closed to maintain air in the tube.

3. Method according to claim 1, **characterized by** the fact that the tube is made of material with specific weight below the specific weight of the inundation liquid.

4. Method according to claim 1, **characterized by** the fact that the tube is made of thermo-plastic material and the inundation liquid is heated to increase the flexibility of the tube during its sliding in the conduit.

5. Method according to claim 4, **characterized by** the fact that the inundation liquid flows along the section of the conduit.

6. Method according to claim 5, **characterized by** the fact that the inundation liquid re-circulates between the two ends of the section of the conduit.

7. Method according to claim 4, **characterized by** the fact that the liquid is heated at a temperature of approximately 40-45°C.

8. Method according to claim 1, **characterized by** the fact that for the sliding along the conduit, the tube is propelled along the conduit and is provided with an initial end connected to a driving cable stretched along the conduit from the end opposed to that of introduction of the tube.

9. Method according to claim 1, **characterized by** the fact that the tube is provided with external diameter quite below the internal diameter of the conduit, and is made of thermo-plastic, being filled with a hot fluid under pressure after the introduction in the conduit in order to heat it to a temperature sufficient to soften and stabilize the expansion of the conduit.

10. Method according to claim 9, **characterized by** the fact that the hot fluid is water.

11. Method according to claim 9, **characterized by** the fact that the temperature of the fluid is of approximately 90°C.

12. Method according to claim 9, **characterized by** the fact that before the expansion of the diameter of the tube, it is approximately 10% of the internal diameter of the conduit.

13. Method according to claim 1, **characterized by** the fact that the tube is made of polyethylene.

14. Method according to claim 1, **characterized by** the fact that additives are added to the inundation liquid in order to reduce the sliding attrition of the tube in the conduit.

15. Method according to claim 1, **characterized by** the fact that the inundation liquid is water.

16. Equipment for insertion of a tube (11) made of plastic material insider a conduit (12) already in operation, comprising a pair of collections (15, 115),e each one with a connection (16, 116) for the fixation with sealing to a respective end of a section of the conduit (12), each collector further comprising an entry/exit fragment (17, 117) disposed inclined with an obtuse angle in relation to the axle of the respective end of the conduit in order to stimulate and allow the passage of the tube in the conduit, with the nozzle (18, 118) of the fragment of the tube above the conduit, and the equipment further comprises means (19) to inundate the section of conduit closed by the two collectors with a liquid, in order to allow the sliding of the tube along the conduit, while the hydrostatic impulse reduces the sliding effort.

17. Equipment according to claim 16, **characterized by** the fact that the collectors (15, 115) are provided with a connection (24, 124) of entry/exit of the liquid in the conduit, and at least one of the connections of entry/exit is connected to the inundation means (19).

18. Equipment according to claim 16, **characterized by** the fact that the inundation means (19) comprise means of circulation (21) and heating (22) of the liquid in the conduit in order to increase the flexibility of the tube during its sliding in the conduit.

19. Equipment according to claim 18, **characterized by** the fact that the means of circulation (19) remove the liquid from the conduit through the connection of entry/exit (24, 124) of one of the collectors, reinserting it in the conduit through the connection of entry/exit of the other collector.

20. Equipment according to claim 18, **characterized by** the fact that the means of heating (22) heat the liquid at a temperature of approximately 40-45°C.

21. Equipment according to claim 16, **characterized by** the fact of comprising means (23) of impulsion of the tube along the conduit and a driving cable (132) connected to the initial end of the tube, and stretched along the conduit from the end opposed to that of introduction of the tube in the conduit.

22. Equipment according to claim 16, **characterized by** the fact that the tube (11) is made of thermo-plastic material and has an external diameter quite below the internal diameter of the conduit, and the equipment comprises means (42) of circulation of hot fluid under pressures and connectable with the ends of the tube after its introduction in the conduit, heated at a temperature sufficient to soften and stabilize the radial expansion of the conduit.

23. Equipment according to claim 22, **characterized by** the fact that the hot fluid is water.

24. Equipment according to claim 22, **characterized by** the fact that the temperature is of approximately 90°.

25. Equipment according to claim 22, **characterized by** the fact that before the expansion, the diameter of the tube is approximately 10% the internal diameter of the conduit.

26. Equipment according to claim 16, **characterized by** the fact that the tube is made of polyethylene.

27. Equipment according to claim 16, **characterized by** the fact that additives are added to the inundation liquid in order to reduce the sliding attrition of the tube in the conduit.

28. Equipment according to claim 16, **characterized by** the fact that the inundation liquid is water.

29. Device for the insertion of a tube made of plastic material inside a conduit already in operation, comprising a collector (15, 115) provided with a connection (16, 116) for the fixation of sealing of a respective end of section of the conduit, considering that the collector comprises a connection (24, 124) of entry/exit of inundation liquid of the conduit and a fragment of tube of entry/exit (17, 117) disposed inclined with an obtuse angle in relation to the axle of the respective end of the conduit in order to stimulate and allow the passage of the tube in the conduit.
